# EUROPEAN PATENT SPECIFICATION

(11) **EP 1 486 384 B1**
(45) Date of publication and mention of the grant of the patent: **21.05.2014**
(21) Application number: 04012705.2
(22) Date of filing: 28.05.2004
(51) Int. Cl.: B60R 21/20

(54) **Child seat with airbag**
Kindersitz mit Airbag
Siège d'enfant avec airbag

(30) Priority: 12.06.2003 JP 2003167976
(43) Date of publication of application: 15.12.2004
(73) Proprietor: TAKATA CORPORATION, Minato-ku, Tokyo 106-8510 (JP)
(72) Inventor: Yoshida, Ryoichi, Minato-ku Tokyo 106-8510 (JP)
(74) Representative: Banzer, Hans-Jörg

(56) References cited:
- EP-A- 0 925 997
- EP-A- 1 223 074
- WO-A-91/19623
- WO-A-95/13934
- DE-A- 4 446 595
- DE-A- 10 157 707
- DE-C- 10 156 621
- FR-A- 587 430
- FR-A- 1 306 814
- US-A- 3 265 438
- US-A- 4 592 588
- US-A- 5 292 175

## Description

### [Detailed Description of the Invention]

### [Technical Field of the Invention]

The present invention relates to a child seat placed on a seat of, for example, an automobile, and particularly, to a child seat that protects a child from a large impact caused by a side-on collision of, for example, an automobile.

### [Description of the Related Art]

Child seats placed on automobile seats generally include a seat portion that supports the hip of the child, a rear portion that supports the back of the child, and left and right side panels that extend along the sides of the child.

Japanese Unexamined Patent Application Publication No. 10-157553 discloses a child seat that protects a child from a large impact caused by, for example, a side-on collision of an automobile. According to the protection method in this document, airbags are inflatable along the outer surfaces of left and right side panels (side supporters).

Japanese Unexamined Utility Model Registration Application Publication No. S64-37743 discloses a child seat having a horseshoe-shaped headrest that surrounds the back and the two sides of the child's head.

A child seat having the features of the preamble of independent claim 1 is known from WO 01/66380 A1.

In addition, DE 101 57 707 A1 discloses a child seat having a seat body with a seat portion for seating a child, a rear portion, and left and right side panels. A vehicle seat with cushions being disposed along inner surfaces of side panels of the seat body is known from US 4,592,588 A.

### [Problems to be Solved by the Invention]

Japanese Unexamined Patent Application Publication No. 10-157553 requires a gas generator with a large capacity since the airbags are inflatable over the entire outer surfaces of the side panels. Furthermore, if the airbags operate when a person is seated beside the child seat, one of the airbags inflated between the person and the child seat may apply an unexpected external force to the person.

According to Japanese Unexamined Utility Model Registration Application Publication No. S64-37743, the headrest being wrapped around the child's head at all times may cause discomfort for the seated child.

An object of the present invention is to solve the problems mentioned above by providing a child seat that has a simple structure and achieves thorough protection of a child.

### [Means for Solving the Problems]

This object is achieved by a child seat according to claim 1. The dependent claims define preferred or advantageous embodiments of the child seats.

A child seat of the present invention, having a seat body that includes a seat portion, a rear portion, and left and right side panels, is provided with airbags which are inflatable over regions covering the sides of the head of a seated child, and hollow cushions disposed along the inner surfaces of the side panels.

If an automobile equipped with this child seat is involved in a collision, the airbags are inflated over the regions covering the sides of the head of the child. Thus, an impact given to the child's head is absorbed. Furthermore, a large impact from the sides in, for example, a side-on collision is also absorbed by the cushions.

The cushions are preferably disposed below the inflation regions of the airbags. The cushions receive the body parts of the child other than the head to absorb the impact.

Because the airbags may only require a size that is inflatable over the sides of the head of a child, an airbag inflator provided in the child seat, which includes a sensor that detects an automobile collision and gas supplying means for inflating the airbags in response to a detection signal from the sensor, requires only a small capacity.

In the present invention, the airbags may be inflated by supplying the gas inside the cushions to the airbags. In this case, when the cushions receive a load from the sides during, for example, a side-on collision, the gas inside the cushions is released toward the airbags so that the airbags are inflated over the regions covering the sides of the child's head. For this reason, the gas supplying means for inflating the airbags is not necessary. The movement (discharging) of the gas from the cushions to the airbags allows the cushions to absorb the impact caused when the load is applied to the cushions.

In the present invention, gas bags containing gas may be used as the cushions. The gas bags, which are lightweight, are preferable as the cushions of the child seat of the present invention.

In this case, gas discharging means may be provided for discharging the gas inside each gas bag toward the corresponding airbag when the gas pressure inside the gas bag exceeds a predetermined value. Accordingly, the airbags are inflated only when the pressing force of the child's body against the gas bags exceeds a predetermined pressure.

The child seat may include check valves for preventing backflow of the gas from the airbags to the gas bags. This maintains the internal pressure of the airbags for a longer period of time.

In the present invention, each of the left and right side panels may be provided with the airbag and the cushion, and the gas inside the cushion on one of the panels can be supplied to the airbags on both panels. This is preferable for preventing rebounding of the child's head.

Shape-maintaining means are further provided for maintaining the shape of each of the cushions until the pressing force applied against the cushion reaches a predetermined value. Thus, a small pressing force will not deform the cushions. Spacers having a simple structure used as the shape-maintaining means.

In the present invention, inflation-shape regulating means may be provided for regulating the inflated shape of each airbag. Tether straps may be preferably used as the inflation-shape regulating means.

The inflation-shape regulating means allows the airbags to be inflated to a shape and size that correspond to the spaces between the child seat and the sides of the child's head.

In the present invention, venting means may be provided for discharging the gas inside each of the airbags to absorb impact. A vent hole provided on the airbag, for example, may be applied as the venting means. However, the venting means is not limited to this structure. The venting means improves the absorption of the impact.

Another child seat of the present invention is provided with a seat body which includes a seat portion for seating the child, a rear portion, and left and right side panels, and is also provided with cushions disposed along the inner surfaces of the side panels. Because the cushions are preliminarily provided along the inner surfaces of the side panels, a mechanism for rapidly inflating the side-panel airbags during a collision, as in Japanese Unexamined Patent Application Publication No. 10-157553, is not necessary. Accordingly, a child seat with a simple structure is provided.

Gas bags containing gas, which are lightweight, may be preferably used as the cushions.

The child seat may include venting means for discharging the gas inside each gas bag when the pressure inside the gas bag exceeds a predetermined value. The venting means allows the gas bag to substantially absorb impact even when a large impact is given to the gas bag. If the venting means of the gas bag is not operated in an automobile collision due to only a small impact on the gas bag, the child seat may be used successively without additional maintenance.

In the present invention, at least one of the side panels may include a plurality of the cushions. In this case, even when only one of the cushions receives a pressing force, the gas pressure inside the cushion rises to give a reactive force against the child and to discharge the gas from the cushion to the corresponding airbag.

### [Brief Description of the Drawings]

Fig. 1 is a perspective view of a child seat according to a first embodiment.
Fig. 2 is another perspective view of the child seat of Fig. 1, in which airbags are in an inflated state.
Fig. 3 includes cross-sectional views taken along line III-III of Fig. 1.
Fig. 4 includes horizontal cross-sectional views of an upper portion of a child seat according to a second embodiment.
Fig. 5 is a perspective view of a child seat according to a third embodiment.
Fig. 6 is a perspective view of a child seat according to a fourth embodiment.
Fig. 7 includes longitudinal cross-sectional views of a child seat according to a fifth embodiment.

### [Description of the Embodiments]

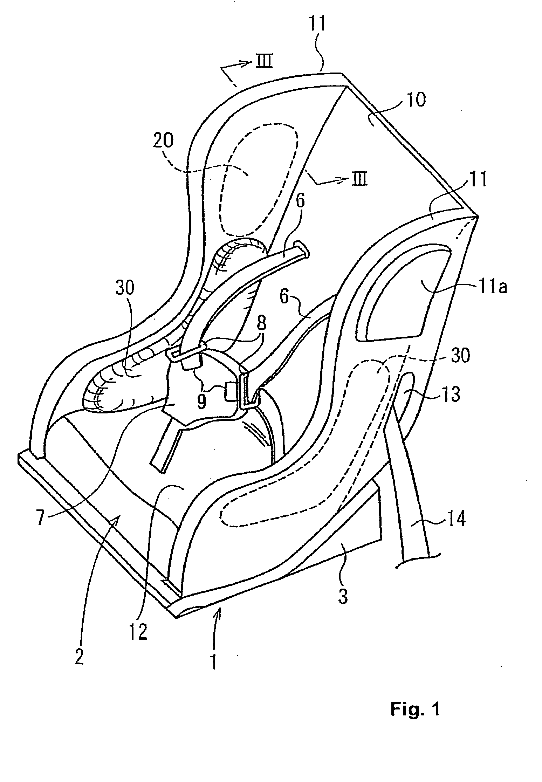

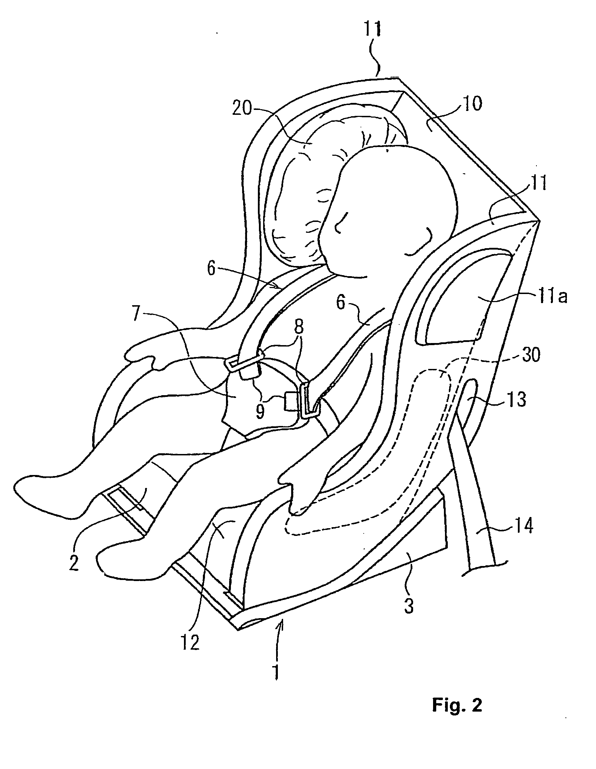

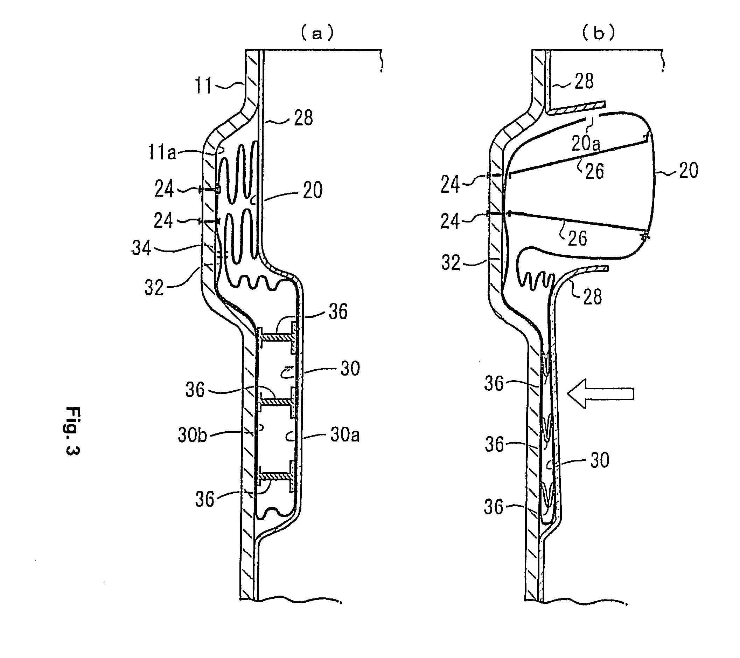

Embodiments of the present invention will now be described with reference to the drawings. Fig. 1 is a perspective view of a child seat according to a first embodiment. Fig. 2 is another perspective view of the child seat of Fig. 1, in which airbags are in an inflated state. Fig. 3 includes cross-sectional views taken along line III-III of Fig. 1. Fig. 3(a) illustrates one of the airbags in the deflated state and Fig. 3(b) illustrates the airbag in the inflated state.

Referring to Fig. 1, a child seat 1 includes a seat body 2 for seating a child and a base 3 that supports the seat body 2 in a reclinable manner. The seat body 2 includes a seat portion 12 that supports the hip of the child; a rear portion 10 that supports the back and the head of the child; and side panels 11 having a wall-like structure extending forward from left and right sides of the rear portion 10. The side panels 11 extend from both sides of the rear portion 10 to the seat portion 12.

The seat body 2 is provided with two child seatbelts 6 for restraining the child. Each child seatbelt 6 is inserted through a belt tongue 8. A chest pad 7 is vertically arranged upward from the front of the seat portion 12. The chest pad 7 is provided with two buckles 9 that latch the belt tongues 8.

The rear ends of the seatbelts 6 are inserted through the rear portion 10 and are retracted by seatbelt retractors (not shown in the drawing) equipped with emergency locking mechanisms provided inside the seat body 2. The retractors become locked during an automobile collision to hold back the withdrawing of the seatbelts 6. The seatbelt retractors can be omitted as desired.

The child seat 1 is secured to the automobile seat (not shown in the drawing) by an adult seatbelt 14. Reference numeral 13 indicates one of belt-holes through which the adult seatbelt 14 is inserted.

The child seat 1 is used by seating a child in the seat body 2, strapping the seatbelts 6 over the child, and then fastening the belt tongues 8 to the buckles 9.

In the first embodiment, upper portions of the left and right side panels 11 and 11 are each provided with an airbag holder 11a that faces one side of the head of a child seated in the child seat 1. Airbags 20 are each mounted in the corresponding holder 11a. The holders 11a are recesses provided on the inner surfaces (each surface facing the child's head) of the side panels 11.

Each airbag 20 is folded and housed inside the corresponding airbag holder 11a. The airbag 20 is mounted on the corresponding side panel 11 by fasteners 24 such as rivets. The fasteners 24 and an airbag surface, toward which the airbag 20 is inflated, are connected with tether straps 26.

Referring to Figs. 2 and 3(b), each of the airbags 20 has a size that is inflatable only over the side of the head of a child seated in the child seat 1. The airbag 20 is provided with a vent hole 20a (Fig. 3(b)) for discharging gas.

The inner surface of each side panel 11 is provided with a cover sheet 28 that covers the folded airbag 20 and that seals the holder 11a. When the airbag 20 is inflated, the cover sheet 28 is torn by the pressing force of the airbag 20 to uncover the holder 11a.

In the first embodiment, the inner surface of each side panel 11 is provided with a hollow cushion 30 below the airbag 20. The airbag 20 and the cushion 30 communicate with each other through a duct 32. The duct 32 is blocked by blocking means 34, such as a tear seam. When the gas pressure inside the cushion 30 exceeds a certain value, the blocking means 34 is released to allow discharging of gas from the cushion 30 to the airbag 20.

The cushion 30 is disposed substantially over the whole inner surface of the side panel 11 below the airbag 20. The cushion 30 contains gas with a pressure (for example, 1.5 to 3 atm) that is higher than that of the atmosphere.

A surface 30a of the cushion 30 facing a child's body is formed of semi-rigid synthetic-resin. Spacers 36 are disposed between the surface 30a and its opposing surface 30b adjacent to the side panel 11. When a load applied to the cushion 30 exceeds a certain value, the spacers 36 are compressed to allow volume reduction of the cushion 30.

According to the child seat 1, the cushions 30 receive the body parts, such as the shoulders, the torso, the waist, and the thighs, of the child seated in the seat 1 during, for example, a side-on collision of an automobile. When the load applied to each cushion 30 exceeds a certain value, the spacers 36 are bent. The pressure inside the cushion 30 then exceeds a certain value to release the blocking means 34, and the gas inside the cushion 30 is discharged towards the airbag 20. Because the volume of the cushion 30 is reduced, the impact given to the body of the child is absorbed.

Referring to Fig. 3(b), the discharging of gas from the cushion 30 to the airbag 20 allows the airbag 20 to break open the cover sheet 28. Consequently, the airbag 20 is inflated between the side panel 11 and the child's head and receives the side of the head so that the impact given to the head is absorbed.

According to the child seat 1, the cushions 30 absorb the impact caused by the load applied to the child's body from the sides during, for example, a side-on collision. Furthermore, each of the airbags 20 inflated between the child's head and the side panel 11 receives the head. Because the gas in the airbag 20 is discharged outward through the vent hole 20a, the impact given to the child's head is absorbed.

In the first embodiment, when a load is applied to one of the cushions 30, the volume of the cushion 30 is reduced, whereby the gas inside the cushion 30 flows toward the airbag 20 to inflate the airbag 20. Accordingly, an airbag inflating means, such as an inflator, is not necessary.

In this child seat 1, airbags are not inflatable outward from the two sides of the seat body 2, and therefore, a person beside the seat 1 will not receive any unexpected external force from the seat 1. Furthermore, if a person hits against the seat 1, the impact is absorbed by the cushion 30.

Although the cushion 30 contains gas with a pressure higher than that of the atmosphere in this embodiment, the gas in the cushion 30 may alternatively be atmospheric gas. Furthermore, the duct 32 may be provided with a check valve to prevent backflow of gas from the airbag 20 to the cushion 30.

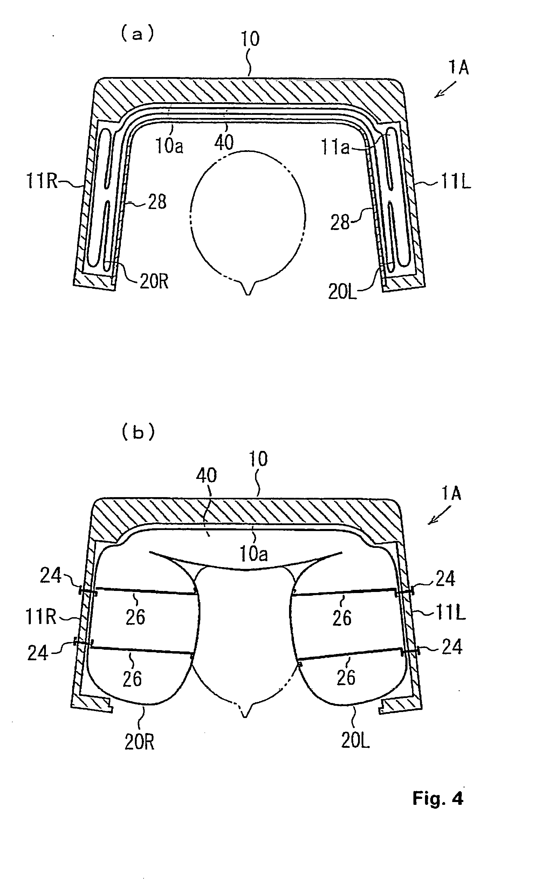

Fig. 4 includes horizontal cross-sectional views of an upper portion of a child seat 1A according to a second embodiment. Fig. 4(a) illustrates airbags in the deflated state, whereas Fig. 4(b) illustrates the airbags in the inflated state.

In the second embodiment, a left airbag 20L and a right airbag 20R, respectively, are provided on the two upper inner surfaces of side panels 11L and 11R. Furthermore, the cushions 30 (not shown in Fig. 4) are provided on the inner surfaces of the side panels 11L and 11R below the airbags 20L and 20R. The cushion on the left side panel 11L communicates with the airbag 20L through a duct, while the cushion on the right side panel 11R also communicates with the airbag 20R through a duct.

In the second embodiment, the two airbags 20L and 20R communicate with each other through a duct 40.

The duct 40 in the second embodiment has a flexible hose-like structure. When gas is not passing through the duct 40, the duct 40 is either flat or tubular with a small diameter. On the other hand, when gas is sent through the duct 40, the duct 40 is inflated such that its thickness increases. Alternatively, the duct 40 may be formed of a non-inflatable tubular material.

The front surface of the rear portion 10 has a groove 10a in which the deflated duct 40 is disposed. The groove 10a extends laterally across the front surface of the rear portion 10. The two ends of the groove 10a are connected to the two airbag holders 11a provided on the inner surfaces of the side panels 11L and 11R.

The airbags 20L and 20R are folded and housed inside the corresponding airbag holders 11a, and the duct 40 is housed inside the groove 10a. The cover sheet 28 is disposed over the inner surfaces of the side panels 11L and 11R and over the front surface of the rear portion 10 so as to cover the airbags 20L and 20R and the duct 40. When the airbags 20L and 20R and the duct 40 are inflated, the pressing force causes the cover sheet 28 to be torn open.

Any other components of the child seat 1A are similar to those of the child seat 1 shown in Figs. 1 to 3. In Fig. 4, the airbags 20L and 20R are each provided with the tether straps 26 and a vent hole (not shown in the drawing), as in the airbag 20.

In the child seat 1A, when a load applied to one of the cushions 30 exceeds a certain value during, for example, a side-on collision of an automobile, the spacers 36 in the cushion 30 are deformed so that the gas is discharged from the cushion 30 to one of the corresponding airbags 20L and 20R. Furthermore, through the duct 40, the gas inside one of the airbags 20L and 20R flows toward the other one of the airbags 20R and 20L. Consequently, as shown in Fig. 4(b), the airbags 20L and 20R are inflatable between the child's head and the side panels 11L and 11R so as to receive the head from both sides. The impact given to the child's head is thus absorbed. Furthermore, as shown in the drawing, the duct 40 is also inflatable behind the child's head to receive the back of the head so that the impact is absorbed.

According to the child seat 1A, the cushions 30 absorb the impact caused by the load applied from the sides during, for example, a side-on collision. Furthermore, the airbags 20L and 20R absorb the impact given to the child's head.

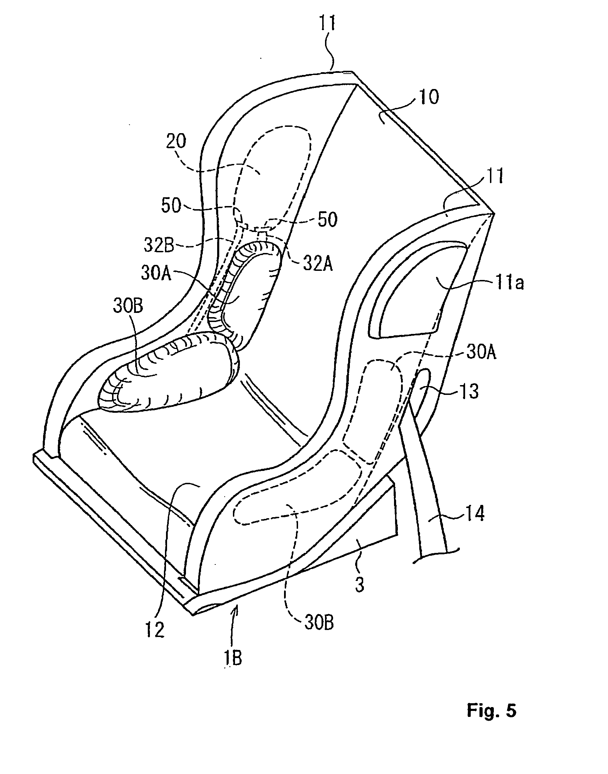

Fig. 5 is a perspective view of a child seat 1B according to a third embodiment. In the third embodiment, each inner surface of the side panels 11 is provided with two cushions 30A and 30B which are disposed below the airbag 20. The cushion 30A is disposed above the cushion 30B. The cushions 30A and 30B communicate with the airbag 20, which is disposed above the cushions 30A and 30B, through respective ducts 32A and 32B. The ducts 32A and 32B are each provided with blocking means 34 (not shown in Fig. 5) for blocking the duct 32A or 32B until the gas pressure inside the corresponding one of the cushions 30A and 30B exceeds a certain value.

Furthermore, the ducts 32A and 32B are each provided with a check valve 50 for preventing backflow of gas from the airbag 20 to the corresponding one of the cushions 30A and 30B.

Any other components of the child seat 1B are similar to those of the child seat 1 shown in Figs. 1 to 3. Although the child seatbelts 6, the chest pad 7, and the buckles 9 are omitted in Fig. 5 to clearly express the structures of the airbag and the cushions, these components are included in the child seat 1B. The cushions 30A and 30B have the same structure as the cushion 30.

According to the child seat 1B, when at least one of the cushions 30A and 30B receives a pressing force during a collision such that the gas pressure in the cushion exceeds a certain value, the gas is supplied to the airbag 20 from the cushion to inflate the airbag 20, as in Fig. 2. Thus, the impact given to the body and the head of the child is absorbed.

After the gas is supplied to the airbag 20 from both of the cushions 30A and 30B, even if the gas pressure in at least one of the cushions 30A and 30B becomes lower than the pressure inside the airbag 20, the check valve 50 prevents the backflow of the gas from the airbag 20 to the cushion. Accordingly, the internal pressure of the airbag 20 is maintained.

Alternatively, the two airbags may be connected with each other through a duct, as in Fig. 4.

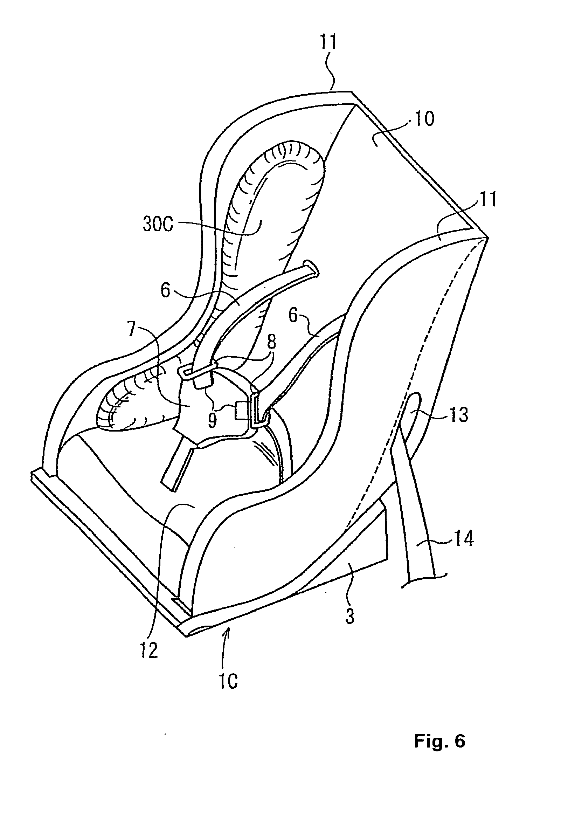

According to the above embodiments, an impact is absorbed by the cushions and the airbags inflated by the supplying of gas from the cushions. However, in the present invention, the airbags may be omitted like a child seat 1C of a fourth embodiment shown in Fig. 6. In this case, a cushion 30C may be disposed on the inner surface of each side panel 11 such that the cushion 30C extends to the upper inner surface. The cushion 30C is provided with spacers and has the same internal structure as the cushion 30. The cushion 30C contains atmospheric gas and is provided with a vent hole (not shown in the drawing).

When the body or the head of a child hits against the cushion 30C during a collision, the spacers in the cushion 30C are deformed so that the volume of the cushion 30C is reduced. The gas inside the cushion 30C is discharged through the vent hole, whereby the impact is absorbed.

Although one cushion 30C is provided for each side panel 11 in Fig. 6, two or more cushions are also possible. Furthermore, the interior of each cushion 30C may be separated into multiple chambers.

The cushion 30C may contain gas with a pressure (for example, 1.1 to 3 atm) that is higher than that of the atmosphere. Furthermore, the vent hole may be provided with pressure-holding means, such as a valve or a tear seam, for blocking the hole until the pressure in the cushion 30C reaches a predetermined value.

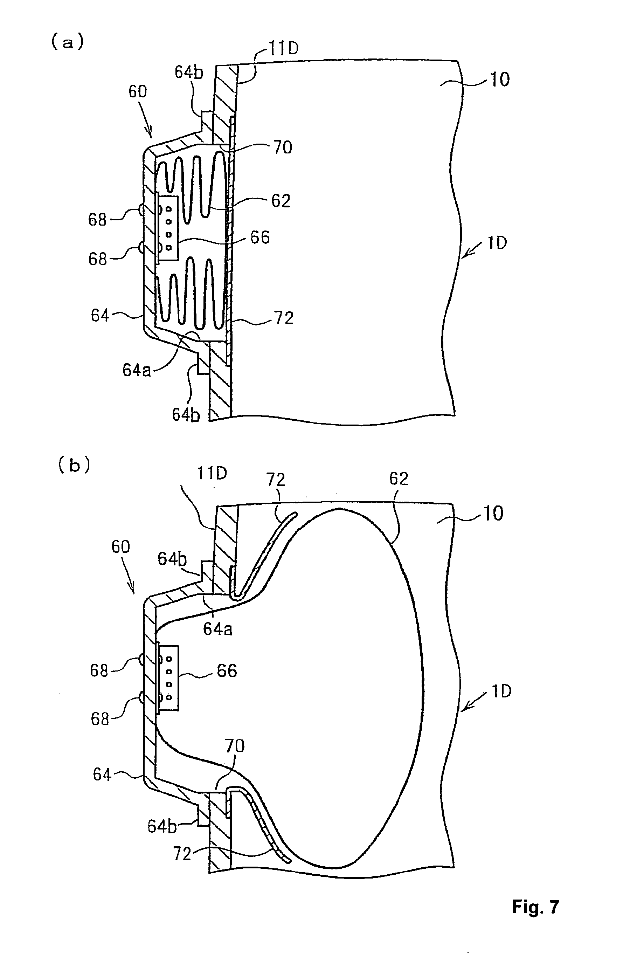

Although the airbags are inflatable using the gas from the cushions in Figs. 1 to 5, an inflator may alternatively be provided for inflating the airbags. Fig. 7 includes longitudinal cross-sectional views of an upper portion of one of the side panels of a child seat 1D provided with an inflator-equipped airbag device 60 according to a fifth embodiment.

The airbag device 60 includes an airbag 62, a casing 64 for housing the airbag 62, an inflator 66 for inflating the airbag 62, and a sensor (not shown in the drawing) that detects automobile collisions. The casing 64 has a side opening 64a. The airbag 62 is folded and housed inside the casing 64. The inflator 66 discharges gas in response to a detection signal from the sensor.

Referring to Fig. 7(b), the airbag 62 has a size that is inflatable over the side of the head of a child seated in the child seat 1D, like the airbag 20. The airbag 62 is provided with a vent hole (not shown in the drawing).

In the fifth embodiment, the inflator 66 is mounted on the casing 64 while being disposed inside the airbag 62. Reference numeral 68 indicates a fastener, such as a rivet, for mounting the inflator 66 on the casing 64. The base of the airbag 62 is disposed between the flanged portion of the inflator 66 and the casing 64.

Upper portions of the two side panels 11D are each provided with an airbag-inflation opening 70 that faces the side of the head of the child seated in the child seat 1D. As shown in Fig. 7(a), the airbag device 60 is disposed on the outer side surface of each side panel 11D such that the side opening 64a of the casing 64 corresponds to the opening 70. A flange 64b protrudes from the edge of the side opening 64a of the casing 64. The flange 64b is disposed along the edge of the opening 70 so as to be mounted on the side panel 11D.

A cover sheet 72 is disposed over the opening 70 on the inner surface of the side panel 11D. When the airbag 62 is inflated, the pressing force of the airbag 62 tears open the cover sheet 72 to uncover the opening 70.

According to the child seat 1D, when an automobile is involved in a collision, the sensor of the airbag device 60 detects the collision. The inflator 66 then discharges gas in response to the detection signal from the sensor. As shown in Fig. 7(b), the gas from the inflator 66 inflates the airbag 62 and tears open the cover sheet 72. Thus, each of the airbags 62 is inflatable between the side of the child's head and the corresponding side panel 11D.

### [Advantages]

As described above, the present invention provides a child seat that has a simple structure and achieves thorough protection of a child.

## Claims

1. A child seat (1; 1A; 1B; 1C; 1D) comprising:
a seat body (2) having a seat portion (12) for seating a child, a rear portion (10), and left and right side panels (11; 11L, 11R); and
cushions (30; 30A; 30B; 30C; 30D) disposed along the inner surfaces of the side panels (11),
**characterized in that**
the cushions (30; 30A; 30B; 30C; 30D) comprise spacers (36) disposed between opposing surfaces (30a, 30b) of the cushions, the spacers (36) being provided as shape-maintaining means (36) for maintaining the shape of each of the cushions (30; 30A, 30B) until the pressing force applied against the cushion (30; 30A, 30B) reaches a predetermined value.

2. The child seat (1; 1A; 1B; 1C; 1D) according to Claim 1, wherein the cushions (30; 30A; 30B; 30C; 30D) are gas bags containing gas.

3. The child seat (1C) according to Claim 2, further comprising venting means for discharging the gas inside each gas bag (30; 30A; 30B; 30C; 30D) when the pressure inside the gas bag (30C) exceeds a predetermined value.

4. The child seat (1; 1A; 1B; 1C; 1D) according to any one of Claims 1 to 3, wherein at least one of the side panels (11; 11L, 11R) includes a plurality of the cushions (30; 30A, 30B, 30C).

5. The child seat (1; 1A; 1B; 1D) according to any one of Claims 1 to 4, further comprising airbags (20; 20L, 20R; 62) which are inflatable over the sides of the head of the seated child.

6. The child seat (1; 1A; 1B; 1D) according to Claim 5, wherein the cushions (30; 30A, 30B) are disposed below the inflation regions of the airbags (20; 20L, 20R; 62).

7. The child seat (1; 1A; 1B; 1D) according to Claim 5 or 6, wherein the inflation of the airbags (20; 20L, 20R; 62) only cover the sides of the head of the child.

8. The child seat (1; 1A; 1B; 1D) according to any one of Claims 5 to 7, further comprising a sensor that detects an automobile collision, and gas supplying means (30; 30A, 30B; 66) for inflating the airbags (20; 20L, 20R; 62) in response to a detection signal from the sensor.

9. The child seat (1; 1A; 1B) according to any one of Claims 5 to 7, wherein the cushions (30; 30A, 30B) contain gas which is supplied to the airbags to inflate the airbags (20; 20L, 20R).

10. The child seat (1; 1A; 1B) according to Claim 9, further comprising gas discharging means (32, 34, 40) for discharging the gas in each cushion (30; 30A, 30B) toward the corresponding airbag (20; 20L, 20R) when the gas pressure inside the cushion (30; 30A, 30B) exceeds a predetermined value.

11. The child seat (1B) according to Claim 10, further comprising check valve (50) for preventing backflow of gas from the airbags (20) to the cushions (30B).

12. The child seat (1A) according to any one of Claims 9 to 11, wherein each of the left and right side panels (11L, 11R) is provided with the airbag (20L, 20R) and the cushion (30; 30A, 30B), and the gas inside the cushion (30; 30A, 30B) on one of the panels can be supplied to the airbags (20L, 20R) on both panels.

13. The child seat (1; 1A; 1B; 1D) according to any one of Claims 5 to 12, further comprising inflation-shape regulating means (26) for regulating the inflated shape of each airbag (20; 20L, 20R; 62).

14. The child seat (1; 1A; 1B; 1D) according to Claim 13, wherein the inflation-shape regulating means comprises tether straps (26).

15. The child seat (1; 1A; 1B; 1D) according to any one of Claims 5 to 14, further comprising venting means for discharging the gas inside each of the airbags (20; 20L, 20R; 62) to absorb impact.

## Patentansprüche

1. Kindersitz (1; 1A; 1B; 1C; 1D) umfassend:
einen Sitzkörper (2), welcher einen Sitzabschnitt (12), um ein Kind darauf zu setzen, einen hinteren Abschnitt (10) sowie eine linke und eine rechte Seitenwand (11; 11L, 11R) aufweist; und
Polster (30; 30A; 30B; 30C; 30D), welche entlang der Innenflächen der Seitenwände (11) angeordnet sind,
**dadurch gekennzeichnet,**
**dass** die Polster (30; 30A; 30B; 30C; 30D) Abstandshalter (36) umfassen, welche zwischen gegenüberliegenden Flächen (30a, 30b) der Polster angeordnet sind,
wobei die Abstandshalter (36) als eine Form beibehaltende Mittel (36) vorgesehen sind, um die Form von jedem der Polster (30; 30A; 30B) beizubehalten, bis die Druckkraft, welche auf das Polster (30; 30A; 30B) aufgebracht wird, einen vorbestimmten Wert erreicht.

2. Kindersitz (1; 1A; 1B; 1C; 1D) nach Anspruch 1, **dadurch gekennzeichnet, dass** die Polster (30; 30A; 30B; 30C; 30D) Gassäcke sind, welche Gas enthalten.

3. Kindersitz (1 C) nach Anspruch 2, darüber hinaus Lüftungsmittel umfassend, um das Gas innerhalb jedes Gassacks (30; 30A; 30B; 30C; 30D) abzuleiten, wenn der Druck innerhalb des Gassacks (30C) einen vorbestimmten Wert überschreitet.

4. Kindersitz (1; 1A; 1B; 1C; 1D) nach einem der Ansprüche 1 bis 3, **dadurch gekennzeichnet, dass** mindestens eine der Seitenwände (11; 11L, 11R) mehrere der Polster (30; 30A, 30B, 30C) aufweist.

5. Kindersitz (1; 1A; 1B; 1D) nach einem der Ansprüche 1 bis 4, darüber hinaus Airbags (20; 20L, 20R; 62) umfassend, welche über den Seiten des Kopfes des sitzenden Kindes aufblasbar sind.

6. Kindersitz (1; 1A; 1B; 1 D) nach Anspruch 5, **dadurch gekennzeichnet, dass** die Polster (30; 30A, 30B) unterhalb der Aufblasbereiche der Airbags (20; 20L, 20R; 62) angeordnet sind.

7. Kindersitz (1; 1A; 1B; 1D) nach Anspruch 5 oder 6, **dadurch gekennzeichnet, dass** das Aufblasen der Airbags (20; 20L, 20R; 62) nur die Seiten des Kopfes des Kindes überdeckt.

8. Kindersitz (1; 1A; 1B; 1D) nach einem der Ansprüche 5 bis 7, darüber hinaus umfassend einen Sensor, welcher eine Kollision eines Automobils erfasst, und Gaszuführmittel (30; 30A, 30B; 66), um die Airbags (20; 20L, 20R; 62) abhängig von einem Erfassungssignal von dem Sensor aufzublasen.

9. Kindersitz (1; 1A; 1B) nach einem der Ansprüche 5 bis 7, **dadurch gekennzeichnet, dass** die Polster (30; 30A, 30B) Gas enthalten, welches den Airbags zugeführt wird, um die Airbags (20; 20L, 20R) aufzublasen.

10. Kindersitz (1; 1A; 1B) nach Anspruch 9, darüber hinaus Gasableitungsmittel (32, 34, 40) umfassend, um das Gas in jedem Polster (30; 30A, 30B) zu dem entsprechenden Airbag (20; 20L; 20R) abzuleiten, wenn der Gasdruck innerhalb des Polsters (30; 30A, 30B) einen vorbestimmten Wert überschreitet.

11. Kindersitz (1B) nach Anspruch 10, darüber hinaus Rückschlagventile (50) umfassend, um einen Rückstrom eines Gases von den Airbags (20) zu den Polstern (30B) zu verhindern.

12. Kindersitz (1A) nach einem der Ansprüche 9 bis 11, **dadurch gekennzeichnet, dass** die linke und die rechte Seitenwand (11L, 11R) mit dem Airbag (20L, 20R) und dem Polster (30; 30A, 30B) versehen sind, und dass das Gas innerhalb des Polsters (30; 30A, 30B) bei einer der Seitenwände den Airbags (20L, 20R) bei beiden Wänden zugeführt werden kann.

13. Kindersitz (1; 1A; 1B; 1D) nach einem der Ansprüche 5 bis 12, darüber hinaus eine Aufblasform bestimmende Mittel (26) umfassend, um die aufgeblasene Form von jedem Airbag (20; 20L, 20R; 62) zu bestimmen.

14. Kindersitz (1; 1A; 1B; 1D) nach Anspruch 13, **dadurch gekennzeichnet, dass** die eine Aufblasform bestimmenden Mittel Haltebänder (26) umfassen.

15. Kindersitz (1; 1A; 1 B; 1 D) nach einem der Ansprüche 5 bis 14, darüber hinaus Lüftungsmittel umfassend, um das Gas innerhalb jedes der Airbags (20; 20L, 20R; 62) abzuleiten, um einen Stoß zu absorbieren.

## Revendications

1. Siège d'enfant (1; 1A; 1B; 1C; 1D) comprenant:
un corps de siège (2) ayant une partie de siège (12) pour assoir un enfant, une partie arrière (10) et des panneaux latéraux gauche et droit (11; 11L, 11R); et
des coussins (30; 30A; 30B; 30C; 30D) disposés le long des surfaces internes des panneaux latéraux (11),
**caractérisé en ce que**:
les coussins (30; 30A; 30B; 30C; 30D) comprennent des dispositifs d'espacement (36) disposés entre des surfaces opposées (30a, 30b) des coussins, les dispositifs d'espacement (36) étant prévus sous la forme de moyens de maintien de forme (36) pour maintenir la forme de chacun des coussins (30; 30A, 30B) jusqu'à ce que la force de pression appliquée contre le coussin (30; 30A, 30B) atteigne une valeur prédéterminée.

2. Siège d'enfant (1; 1A; 1B; 1C; 1D) selon la revendication 1, dans lequel les coussins (30; 30A; 30B; 30C; 30D) sont des coussins de gaz contenant du gaz.

3. Siège d'enfant (1C) selon la revendication 2, comprenant en outre des moyens d'évent pour évacuer le gaz à l'intérieur de chaque coussin de gaz (30; 30A; 30B; 30C; 30D) lorsque la pression à l'intérieur du coussin de gaz (30C) dépasse une valeur prédéterminée.

4. Siège d'enfant (1; 1A; 1B; 1C; 1D) selon l'une quelconque des revendications 1 à 3, dans lequel au moins l'un des panneaux latéraux (11; 11L, 11R) comprend une pluralité de coussins (30; 30A, 30B, 30C).

5. Siège d'enfant (1; 1A; 1B; 1D) selon l'une quelconque des revendications 1 à 4, comprenant en outre des coussins de sécurité gonflables (20; 20L, 20R; 62) qui sont gonflables sur les côtés de la tête de l'enfant assis.

6. Siège d'enfant (1; 1A; 1B; 1D) selon la revendication 5, dans lequel les coussins (30; 30A, 30B) sont disposés au-dessous des régions de gonflage des coussins de sécurité gonflables (20; 20L, 20R; 62).

7. Siège d'enfant (1; 1A; 1B; 1D) selon la revendication 5 ou 6, dans lequel le gonflage des coussins de sécurité gonflables (20; 20L, 20R; 62) ne couvre que les côtés de la tête de l'enfant.

8. Siège d'enfant (1; 1A; 1B; 1D) selon l'une quelconque des revendications 5 à 7, comprenant en outre un capteur qui détecte une collision d'automobile, et des moyens d'alimentation en gaz (30; 30A, 30B; 66) pour gonfler les coussins de sécurité gonflables (20; 20L, 20R; 62) en réponse à un signal de détection du capteur.

9. Siège d'enfant (1; 1A; 1B) selon l'une quelconque des revendications 5 à 7, dans lequel les coussins (30; 30A, 30B) contiennent du gaz qui est amené aux coussins de sécurité gonflables pour gonfler les coussins de sécurité gonflables (20; 20L, 20R).

10. Siège d'enfant (1; 1A; 1B) selon la revendication 9, comprenant en outre des moyens de décharge de gaz (32, 34, 40) pour décharger le gaz dans chaque coussin (30; 30A, 30B) vers le coussin de sécurité gonflable (20; 20L, 20R) correspondant lorsque la pression de gaz à l'intérieur du coussin (30; 30A, 30B) dépasse une valeur prédéterminée.

11. Siège d'enfant (1B) selon la revendication 10, comprenant en outre des clapets de non-retour (50) pour empêcher le refoulement du gaz des coussins de sécurité gonflables (20) vers les coussins (30B).

12. Siège d'enfant (lA) selon l'une quelconque des revendications 9 à 11, dans lequel chacun des panneaux latéraux gauche et droit (11L, 11R) est muni du coussin de sécurité gonflable (20L, 20R) et le coussin (30; 30A, 30B), et le gaz à l'intérieur du coussin (30; 30A, 30B) sur l'un des panneaux peut être amené aux coussins de sécurité gonflables (20L, 20R) sur les deux panneaux.

13. Siège d'enfant (1; 1A; 1B; 1D) selon l'une quelconque des revendications 5 à 12, comprenant en outre des moyens de régulation de forme de gonflage (26) pour réguler la forme gonflée de chaque coussin de sécurité gonflable (20; 20L, 20R; 62).

14. Siège d'enfant (1; 1A; 1B; 1D) selon la revendication 13, dans lequel les moyens de régulation de forme de gonflage comprennent des sangles d'attache (26).

15. Siège d'enfant (1; 1A; 1B; 1D) selon l'une quelconque des revendications 5 à 14, comprenant en outre des moyens d'évent pour évacuer le gaz à l'intérieur de chacun des coussins de sécurité gonflables (20; 20L, 20R; 62) pour absorber le choc.
